# EUROPEAN PATENT APPLICATION

(11) **EP 4 336 911 A1**
(43) Date of publication of application: **13.03.2024**
(21) Application number: 23194277.2
(22) Date of filing: 30.08.2023
(51) Int. Cl.: H04W 52/02, H04W 24/10, H04L 5/00

(54) **METHOD AND APPARATUS OF SIGNALING FOR NETWORK ENERGY SAVING**

(30) Priority: 01.09.2022 KR 20220110752; 03.08.2023 KR 20230101350
(71) Applicant: KT Corporation, Seongnam-si, Gyeonggi-do 13606 (KR)
(72) Inventor: PARK, Ki Hyeon, 13606 Seongnam-si Gyeonggi-do (KR)
(74) Representative: BCKIP Part mbB

(57) **Abstract**

Discloses are a method and apparatus for performing transmission and reception in a mobile communication system. In other words, a user equipment (UE) receives channel state information-reference signal (CSI-RS) from a base station. Further, the UE performs CSI feedback after receiving the CSI-RS from the base station. Here, proposed are the method and apparatus in which at least one of the CSI-RS reception and the CSI feedback transmission is triggered by receiving downlink control information (DCI) including parameter information associated with network energy saving.

## Description

### CROSS-REFERENCE TO RELATED THE APPLICATION

This application is based on and claims priority on Patent Applications No. 10-2022-0110752 filed on Sep. 1, 2022 and No. 10-2023-0101350 filed on Aug. 3, 2023 in the Korean Intellectual Property Office.

### BACKGROUND

### Technical Field

The disclosure relates to a 5^{th} generation new radio (5G NR) system based on a 3^{rd} generation partnership project.

### Description of the Related Art

As more communication devices require greater communication traffic, necessity for a next generation 5G system corresponding to mobile broadband communication, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, the eMBB corresponds to a next generation mobile communication scenario having such a characteristic as high spectrum efficiency, high user experienced data rate, high peak data rate, and the like, the URLLC corresponds to a next generation mobile communication scenario having such a characteristic as ultra-reliable, ultra-low latency, ultra-high availability, and the like (e.g., V2X, Emergency Service, Remote Control), and the mMTC corresponds to a next generation mobile communication scenario having such a characteristic as low cost, low energy, short packet, and massive connectivity (e.g., IoT).

### SUMMARY

The disclosure is to provide a method and apparatus of signaling for network energy saving in a mobile communication system.

According to an embodiment of the disclosure, a user equipment (UE) in a mobile communication system receives channel state information-reference signal (CSI-RS) from a base station. Further, the UE performs CSI feedback after receiving the CSI-RS from the base station. Here, there is provided a method in which at least one of the CSI-RS reception and the CSI feedback is triggered by receiving downlink control information (DCI) comprising parameter information associated with network energy saving.

Further, according to an embodiment of the disclosure, a base station in a mobile communication system transmits CSI-RS to the UE. Further, the base station receives CSI feedback after transmitting the CSI-RS to the UE. Here, there is provided a method in which at least one of the CSI-RS transmission and the CSI feedback reception is triggered by transmitting DCI comprising parameter information associated with network energy saving.

Further, according to an embodiment of the disclosure, a communication apparatus in a mobile communication system includes at least one processor, and at least one memory configured to store instructions and be operably electrically connectable to the at least one processor, wherein an operation performed based on the instruction executed by the at least one processor includes receiving a CSI-RS. Further, the communication apparatus performs CSI feedback after receiving the CSI-RS from the base station. Here, there is provided the communication apparatus in which at least one of the CSI-RS reception and the CSI feedback is triggered by receiving DCI comprising parameter information associated with network energy saving.

Further, according to an embodiment of the disclosure, a base station in a mobile communication system includes at least one processor; and at least one memory configured to store instructions and be operably electrically connectable to the at least one processor, wherein an operation performed based on the instruction executed by the at least one processor includes: transmitting a CSI-RS. Further, the base station receives CSI feedback after transmitting the CSI-RS to the UE. Here, there is provided the base station in which at least one of the CSI-RS transmission and the CSI feedback reception is triggered by transmitting DCI including parameter information associated with network energy saving.

The DCI may be transceived through a UE dedicated PDCCH.

The parameter information associated with the network energy saving may be given in the form of a bitmap. Further, the parameter information associated with the network energy saving may be configured through a RRC layer.

The parameter information associated with the network energy saving may include CSI-RS transmission frequency information.

At least one of the CSI-RS reception and the CSI feedback may be triggered after a certain amount of time, after receiving the DCI. Further, at least one of the CSI-RS transmission and the CSI feedback reception may be triggered after a certain amount of time, after transmitting the DCI.

### BRIEF DESCRIPTION OF THE DRAWINGS

FIG. 1 illustrates a mobile communication system.
FIG. 2 illustrates a structure of a radio frame used in new radio (NR).
FIGS. 3A to 3C illustrate exemplary architectures for a mobile communication service.
FIG. 4 illustrates a slot structure of a NR frame.
FIG. 5 shows an example of a subframe type in NR.
FIG. 6 illustrates a structure of a self-contained slot.
FIG. 7 illustrates a synchronization signal block (SSB) structure.
FIG. 8 illustrates a channel state information reference signal (CSI-RS) and/or CSI-related signaling to which a network energy saving parameter is applied according to the disclosure.
FIG. 9 illustrates radio resource control (RRC) and downlink control information (DCI) configurations according to the disclosure.
FIG. 10 illustrates SSB and/or physical downlink shared channel (PDSCH) transmission and reception for a legacy user equipment (UE) according to the disclosure.
FIG. 11 illustrates an operation method of a UE according to an embodiment of the disclosure.
FIG. 12 illustrates an operation method of a base station according to an embodiment of the disclosure.
FIG. 13 shows apparatuses according to an embodiment of the disclosure.
FIG. 14 is a block diagram showing a configuration of a UE according to an embodiment of the disclosure.
FIG. 15 is a configuration block diagram of a processor in which the disclosure is implemented.
FIG. 16 is a detailed block diagram of a transceiver of a first apparatus shown in FIG. 10 or a transceiving unit of an apparatus shown in FIG. 11.

### DETAILED DESCRIPTION

The technical terms used herein are used to merely describe specific embodiments and should not be construed as limiting the disclosure. Further, the technical terms used herein should be, unless defined otherwise, interpreted as having meanings generally understood by those skilled in the art but not too broadly or too narrowly. Further, the technical terms used herein, which are determined not to exactly represent the spirit of the disclosure, should be replaced by or understood by such technical terms as being able to be exactly understood by those skilled in the art. Further, the general terms used herein should be interpreted in the context as defined in the dictionary, but not in an excessively narrowed manner.

The expression of the singular number in the disclosure includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the disclosure, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts which are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features individually described in one drawing in this specification may be implemented separately or at the same time.

In the accompanying drawings, user equipment (UE) is illustrated by way of example, but the illustrated UE may be referred to as a terminal, mobile equipment (ME), and the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (eg, a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), the repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Mobile Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and an actual minimum transmission rate of at least 100 Mbps anywhere. The official name of the 5^{th} generation mobile telecommunications is 'IMT-2020.'

The ITU proposes three usage scenarios, for example, enhanced Mobile Broadband (eMBB), massive Machine Type Communication (mMTC) and Ultra Reliable and Low Latency Communications (URLLC).

The URLLC relates to a usage scenario requiring high reliability and low latency. For example, services such as automatic driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and lower battery consumption than a 4G mobile communication system to better implement the Internet of things. A new radio access technology (new RAT or NR) may be proposed for such 5G mobile communication.

An NR frequency band is defined as frequency ranges of two types FR1 and FR2. The numerical value in each frequency range may be changed, and the frequency ranges of the two types FR1 and FR2 may for example be shown in Table 1 below. For convenience of description, the FR1 between the frequency ranges used in the NR system may refer to a Sub-6 GHz range, and the FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may be changed in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs which do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An RS, also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

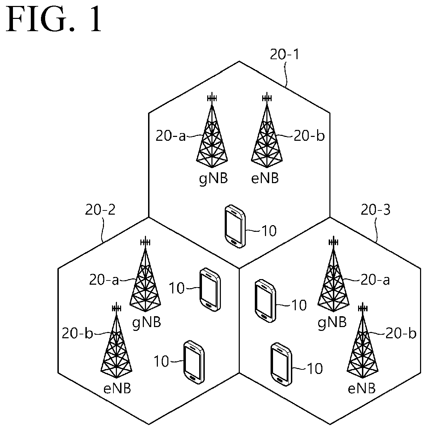

**FIG. 1** **illustrates a mobile communication system.**

As can be seen with reference to FIG. 1, the mobile communication system includes at least one base station (BS). The BS is divided into a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A UE typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be simultaneously performed. In a TDD system in which uplink transmission and downlink transmission are divided in subframe units, uplink transmission and downlink transmission are performed in different subframes.

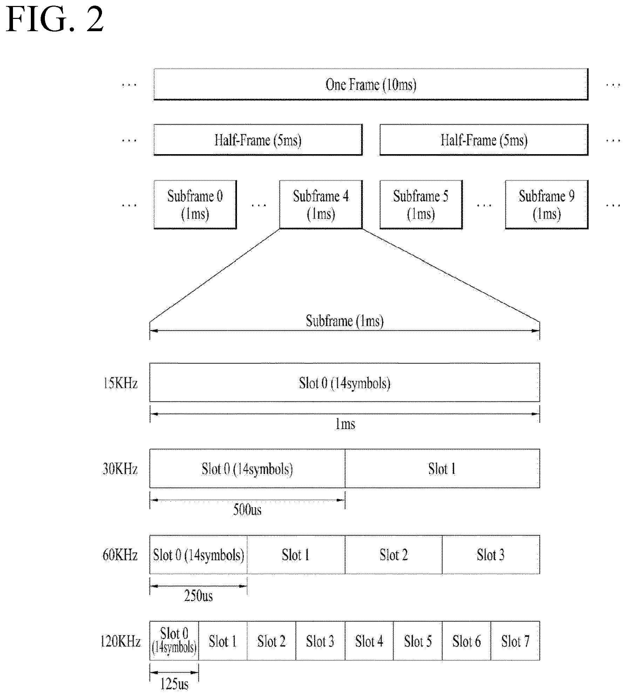

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, a plurality of numerologies may be provided to UEs in the NR system. For example, in the case where a subcarrier spacing (SCS) is 15 kHz, a wide area of the conventional cellular bands is supported, and, in the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a SCS. One cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

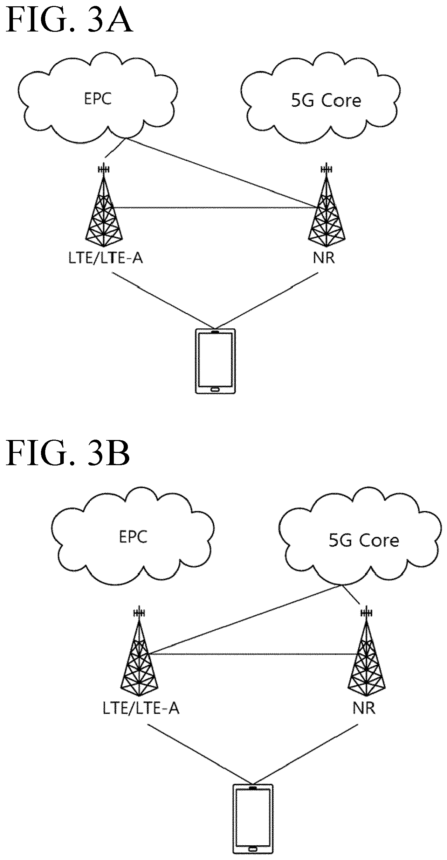

FIGS. 3A to 3C illustrate exemplary architectures for a mobile communication service.

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

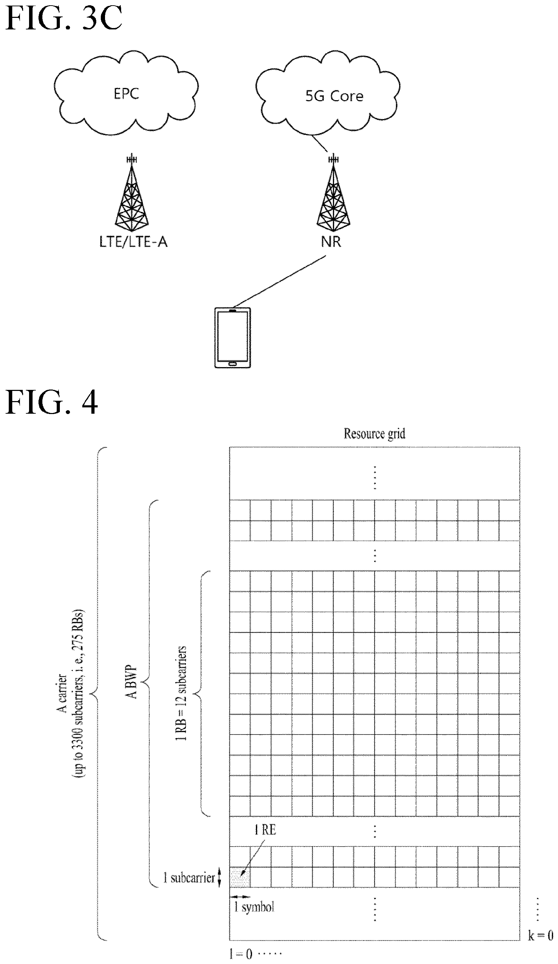

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to paired spectrums and not-paired spectrums. A pair of spectrums indicates including two subcarriers for downlink and uplink operations. For example, one subcarrier in one pair of spectrums may include a pair of a downlink band and an uplink band.

FIG. 4 illustrates a slot structure of an NR frame.

A slot includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in each of the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

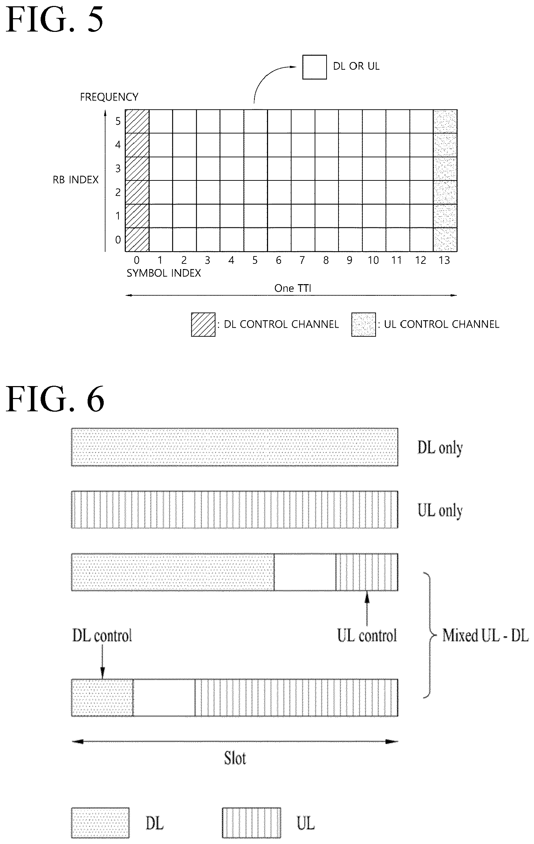

FIG. 5 shows an example of a subframe type in NR.

A TTI (Transmission Time Interval) shown in FIG. 5 may be called a subframe or a slot for NR (or new RAT). The subframe (or slot) shown in FIG. 5 can be used in a TDD system of NR (or new RAT) in order to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as a DL control region) in a slot may be used to transmit a DL control channel, and the last M symbols (hereinafter referred to as a UL control region) in the slot may be used to transmit a UL control channel. N and M are integers greater than 0. A resource area between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception can be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

FIG. 6 illustrates a structure of a self-contained slot.

In the NR system, the frame has a self-contained structure, in which all of a DL control channel, DL or UL data channel, UL control channel, and so on are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource area between the DL control region and the UL control region (hereinafter referred to as a data region) may be used for DL data transmission or UL data transmission.

For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region

DL region: (i) DL data region, (ii) DL control region + DL data region

UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

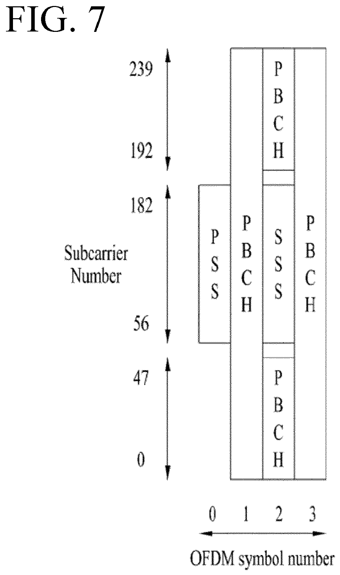

**FIG. 7** **illustrates a synchronization signal block (SSB) structure.**

A UE may perform search for cells, acquisition of system information, beam alignment for initial access, and measurement of a DL, etc. based on an SSB. The SSB and synchronization signal/physical broadcast channel (SS/PBCH) are interchangeably used.

Referring to FIG. 7, the SSB includes a primary synchronization signal (PSS), a secondary synchronization signal (SSS), and a physical broadcast channel (PBCH). The SSB includes four consecutive orthogonal frequency division multiplexing (OFDM) symbols, and the PSS, the PBCH, the SSS/PBCH and the PBCH are transmitted on the respective OFDM symbols. The PSS and SSS may each consist of 1 OFDM symbol and 127 subcarriers, and the PBCH may consist of 3 OFDM symbols and 576 subcarriers. Polar coding and quadrature phase shift keying (QPSK) are applied to the PBCH. The PBCH may have a data RE and a demodulation reference signal (DMRS) RE for each OFDM symbol. There are three DMRS REs for each RB, and there are three data REs between DMRS REs.

### <Disclosure>

In 3GPP LTE and NR, technologies for energy saving were discussed only in the UE where portability and mobility are maximized, but the necessity for introducing the energy saving technologies into the base station, the core, etc. i.e., the network components has been raised for some time in order to respond to various environmental/legal issues such as carbon neutrality. Particularly, in 3GPP Release 18, an agreement was made to proceed with studies and work items in relation to network energy saving. Specifically, the studies will be conducted from April to November 2022, and standardization will be conducted by August 2023.

**[Table 1]**

| | |
|---|---|
| 1. Definition of a base station energy consumption model [RAN1] | |
| | • Adapt the framework of the power consumption modelling and |
| evaluation methodology of TR38.840 to the base station side, including relative energy consumption for DL and UL (considering factors like PA efficiency, number of TxRU, base station load, etc), sleep states and the associated transition times, and one or more reference parameters/configurations. | |
| 2. Definition of an evaluation methodology and KPIs [RAN1] | |
| | • The evaluation methodology should target for evaluating system- |
| level network energy consumption and energy savings gains, as well as assessing/balancing impact to network and user performance (e.g. spectral efficiency, capacity, UPT, latency, handover performance, call drop rate, initial access performance, SLA assurance related KPIs), energy efficiency, and UE power consumption, complexity. The evaluation methodology should not focus on a single KPI, and should reuse existing KPIs whenever applicable; where existing KPIs are found to be insufficient new KPIs may be developed as needed. | |
| | Note: WGs will decide KPIs to evaluate and how. |
| 3. Study and identify techniques on the gNB and UE side to improve network energy savings in terms of both BS transmission and reception, which may include: | |
| | • How to achieve more efficient operation dynamically and/or semi- |
| statically and finer granularity adaptation of transmissions and/or receptions in one or more of network energy saving techniques in time, frequency, spatial, and power domains, with potential support/feedback from UE, and potential UE assistance information [RAN1, RAN2] | |
| | • Information exchange/coordination over network interfaces [RAN3] |
| | Note: Other techniques are not precluded |

Regarding No. 3 in Table 5, various types of energy saving techniques for the base station have been discussed, and in particular, many technologies have been proposed in such a manner that the power of the base station is properly managed or the transmission frequency of essential signals is adjusted.

Meanwhile, most network energy saving technologies are implemented accepting the degradation of communication performance to some extent. For example, in the case of a technology that cuts off power in the absence of a user, a delay may occur due to a restart upon the entrance of a new user, and other delays may occur in terms of the speed, delay, etc. of transmission and reception. Therefore, correct identification of a current situation, appropriate configuration for the situation, and as quick signaling as possible for the judgement and configuration are required.

However, a UE supporting only the existing technologies prior to the Release 17 should still be able to receive normal services on the network even from a base station to which the network energy saving technology corresponding to 3GPP Release 18 has been applied, and therefore the signaling related to the network energy saving should be performed in the form of not only minimizing the impact on the existing UEs but also suppressing the degradation of energy saving performance in the UE capable of supporting new functions.

According to the disclosure, there is provided a signaling method of carrying a network energy/power saving parameter to a UE. For example, there is provided a method of signaling according to default signal frequencies based on network energy saving levels.

Further, according to the disclosure, there are provided a method and apparatus for operating a UE to receive a signaling for a network energy saving parameter.

The disclosure is to provide (1) a method of identifying the network energy saving parameter, (2) a signaling method related to the network energy saving for a Release-18 UE, and (3) a method of operating the network energy saving for a UE supporting the technologies prior to Release 18 (e.g., corresponding to Release 17).

Terms used in the disclosure are defined as follows.

The Release-18 UE refers to a UE that supports the technologies related to the network energy saving applied to Release 18 and is capable of understanding the corresponding signaling, and the Release-17 UE refers to a UE that does not support the technologies related to the network energy saving and does not understand the corresponding signaling. Therefore, the UE that comprehensively supports Release 16, Release 15 and/or some functions of Release 18 but does not support the network energy saving technologies may also belong to the category of the release 17 UE defined in the disclosure.

### First disclosure: A method for determining the network energy saving parameter

The network energy saving may be achieved in broad forms of adjusting an on/off frequency, an SSB frequency, a system information block (SIB) transmission frequency, a CSI-RS transmission frequency, a threshold for identifying state transition, a random access channel (RACH) reception frequency, etc. Each of these values may be predefined for the UE, in which a plurality of parameters may be defined for Release-18 UE in preparation for change in the network energy saving level. For example, in the case of the SSB frequency, an area to which the SSB is actually transmitted may be carried in the form of a bitmap among the existing SSB indices 1 to 8. In other words, several bitmaps may be defined through radio resource control, and an actual SSB transmission form may rely on the network energy saving parameter. Such a network energy saving parameter may be a universal value, may be determined for each energy saving element, or may be a group of several energy saving elements. For example, in the case where the network energy saving parameter is the universal value, the base station may determine the network energy saving level in the form of a specific integer. In addition, values on which actual reliance is placed may be defined among the plurality of energy saving elements configured by radio resource control (RRC) based on such integer indices. Even in the case where the network energy saving parameter is determined for each energy saving element, the corresponding parameter may be expressed in the same form while limiting only the types of energy saving element to be determined. For example, an element to be operated in an energy saving mode may be carried and operated in the form of a bitmap, using as many bits as the energy saving elements.

### Second disclosure: A signaling method related to the network energy saving for the Release-18 UE

The network energy saving parameters to be carried by the first disclosure described above may be operated by being transmitted to the Release-18 UE. To this end, those parameters may be carried in the form of a group common-physical downlink control channel (GC-PDCCH), and this group may be configured in advance to the Release-18 UE with a radio network temporary identifier (RNTI) for scrambling. Alternatively, the parameters may be carried in the form of a UE dedicated PDCCH, and may have a format or RNTI applied distinguishably from those of other PDCCHs. The DCI transmitted through the foregoing GC-PDCCH or dedicated PDCCH may carry the network energy saving parameters along with other information introduced in Release 18, or may be transmitted as additionally included in the existing DCI 2.x transmission information.

Immediately after such transmission, or after a predefined period of time after reception, or after the next frame unit, the UE may perform an operation determined in advance by the network energy saving. For example, the UE may perform rate matching based on a changed SSB location. Alternatively, the UE may perform operations of receiving an added CSI-RS and performing CSI feedback, or may not perform an operation related to a deleted CSI-RS. For example, regarding the CSI-RS resource area or SBB related to the rate matching, whether to exclude the transmission in the corresponding area may be determined based on a combination between a predefined RRC condition and the network energy saving parameter indicated by the DCI or the like.

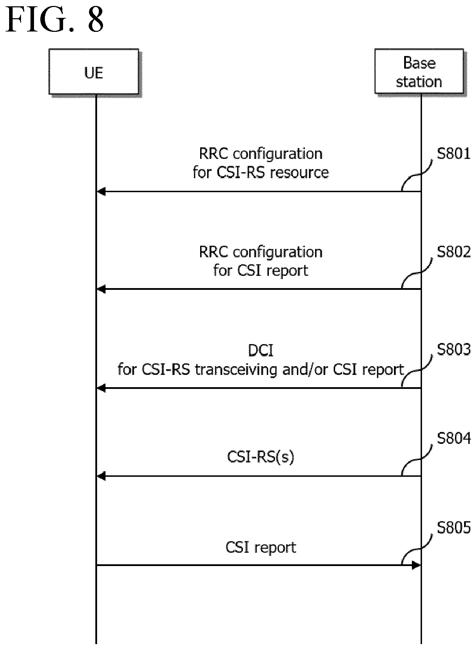

**FIG. 8** **illustrates a CSI-RS and/or CSI-related signaling to which a network energy saving parameter is applied according to the disclosure.**

FIG. 8 illustrates an example of applying the first and/or second disclosure to the CSI-RS and the CSI-related signaling.

Referring to FIG. 8, the base station configures RRC configuration for CSI-RS resource and/or CSI report associated with the network energy saving parameter, and transmits the RRC configuration for the CSI-RS resource and/or the RRC configuration for the CSI report to the UE (S801 and S802). Here, the RRC configurations may be transmitted to the UE by separate signaling or together by single signaling.

After transmitting the RRC configurations for the CSI-RS resource and/or the CSI report associated with the network energy saving parameter to the UE, the base station may transmit the DCI for CSI-RS transceiving and/or CSI report to the UE so as to apply the transmitted RRC configuration (S803). Here, the DCI may include information about a parameter associated with the network energy saving.

Meanwhile, the UE triggers off CSI-RS reception and/or CSI feedback when receiving the DCI including the information about the parameter associated with the network energy saving after receiving the RRC configuration for the CSI-RS resource and/or the CSI report associated with the network energy saving from the base station. Thus, the UE receives at least one CSI-RS from the base station (S804), and feeds the CSI back to the base station based on the at least one received RS (i.e., one CSI-RS or a plurality of CSI-RSs: CSI-RS(s)), in other words, transmits the CSI report to the base station (S805).

Alternatively, the UE may receive the DCI from the base station after receiving the CSI-RS and before performing the CSI feedback. In other words, the UE receives the DCI after receiving at least one CSI-RS from the base station, and thus performs the CSI feedback, in other words, transmits the CSI report to the base station. In this case, the DCI including the information about the parameter associated with the network energy saving may trigger off only performing the CSI feedback, in other words, transmitting the CSI report.

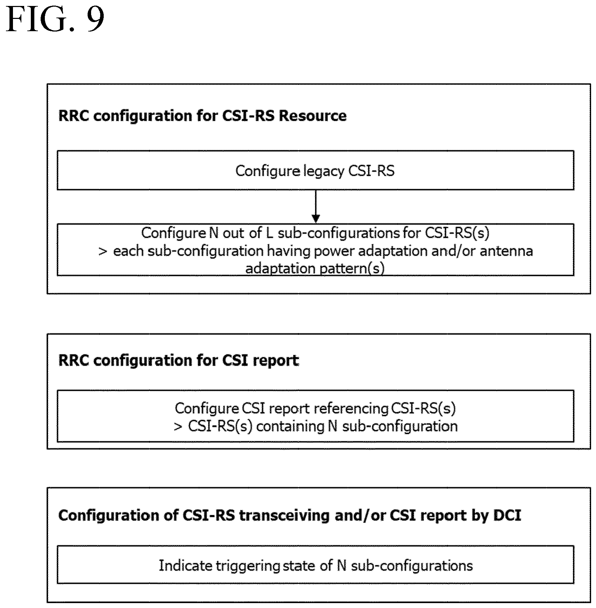

**FIG. 9** **illustrates the RRC and DCI configurations according to the disclosure.**

FIG. 9 shows an example of the RRC configuration for the CSI-RS resource and CSI report, and the configuration of the CSI-RS transceiving and/or CSI report by the DCI, as described above with reference to FIG. 8.

Referring to FIG. 9, in the RRC configuration for the CSI-RS resource, a legacy CSI-RS is first configured. Then, N sub-configurations may be configured out of L sub-configurations for the CSI-RS(s) (where, L and N are natural numbers greater than 1). Each sub-configuration may have power adaptation and/or antenna adaptation patterns, and N sub-configurations may be defined in the form of a bitmap.

In the RRC configuration for the CSI report, CSI report referencing CSI-RS(s) is configured. Here, the CSI-RS(s) may contain N sub-configurations described above.

The configuration of the CSI-RS transceiving and/or CSI report by the DCI may include information indicating a triggering state of N sub-configurations described above. The information indicating the triggering state of N sub-configurations may include the information about the parameter associated with the network energy saving, which may be indicated in the form of a bitmap.

### Third disclosure: A method of operating the network energy saving for the Release 17 UE

Basically, the Release-17 UE that does not receive the network energy saving parameter cannot perform an operation according to the energy saving state unlike the Release-18 UE. However, even for such a UE, the base station needs to perform the best operation when that UE collides with a configuration situation.

① An operation method related to the SSB: First, in the case of the SSB, two situations will be assumed. First, it will be assumed that the transmission frequency of the SBB understood by the Release-18 UE is greater than the transmission frequency understood by the Release-17 UE. In this case, when the base station performs scheduling of the release 17 UE with respect to a SBB transmission location that only the Release-18 UE understands, a problem arises in that the Release-17 UE cannot properly perform the rate matching. Therefore, the base station does not perform the scheduling for the corresponding location of the Release-17 UE, or performs puncturing in a SSB area even if it performs the scheduling. According to the disclosure, the puncturing refers to the following operation.

For example, it will be assumed that information of `ABCDEFGH' is transmitted to 8 resource areas. In this case, the Release-17 UE assumes/identifies that the information of `ABCDEFGH' will be transmitted. However, the fourth and eighth characters of the transmitted information should be 'S' and 'T' to be actually received in the Release-18 UE. To this end, there are two approaches. First, the information may be sequentially transmitted in the form of `ABCSDEFT' in consideration of the reduced resource areas. Second, the information may be transmitted in the form of `ABCSEFGT' by simply removing 'D' and 'H'. Here, the puncturing according to the disclosure refers to the latter type of transmission. The Release-17 UE, which is not aware that 'S' and 'T' are transmitted instead of `D' and `H', receives some incorrect pieces of information because 'S' is transmitted instead of 'D' and 'T' is transmitted instead of 'H', but the base station expect that successful reception is possible through the recovery of the information by forward error correction (FEC) based on the normally received information of `ABC' and 'EFG'. However, additional error signaling may result in generally lowering the reception performance of the Release-17 UE. To compensate for the lowered reception performance, the base station may use a modulation and coding scheme (MCS) index, which is lower than the current channel quality indicator (CQI), to perform the transmission to the Release-17 UE.

Next, it will be assumed that the transmission frequency of the SBB understood by the Release-18 UE is less than the transmission frequency understood by the Release-17 UE. In this case, the base station believes that the Release-17 UE is in the location of the SSB, but there may actually be an area to which the SSB is not transmitted. Regarding this area, the base station may instruct the Release-18 UE to be normally scheduled, but instruct the Release-17 UE to be scheduled by allocating the PDSCH excluding the area to which the SSB should be transmitted in anticipation of the UE's rate matching operation. Of course, when the Release-18 UE is scheduled in this area, such an exclusion operation is not required, and thus the Release-18 UE can use the corresponding resources with higher performance.

② An operation method related to the CSI-RS: in the case of the CSI-RS, like the SBB, there may be areas where the CSI-RS is actually absent even though the Release-17 UE believes that the CSI-RS is present, or the CSI-RS is actually present even though the Release-17 UE believes that the CSI-RS is absent. In the former case, when scheduling for the Release-17 UE, the base station may perform a transmission by excluding the CSI-RS area, and instruct the Release-17 UE not to perform the CSI report in that area, or ignore the results of the report. In the latter case, the base station may not schedule in that area for the Release-17 UE, or perform a transmission by puncturing in the CSI-RS area even if scheduling is performed.

As described above for the SSB and the CSI-RS, where the transmission area understood by the legacy UE is different from the actual transmission area, the same method may be applied even to other periodically transmitted signals.

The disclosures may be applied independently of each other or may be operated in any combination thereof. Further, the terms used in the disclosure include new arbitrary terms for ease of understanding, and thus the disclosure may be actually applied even when other terms with the same meaning are used.

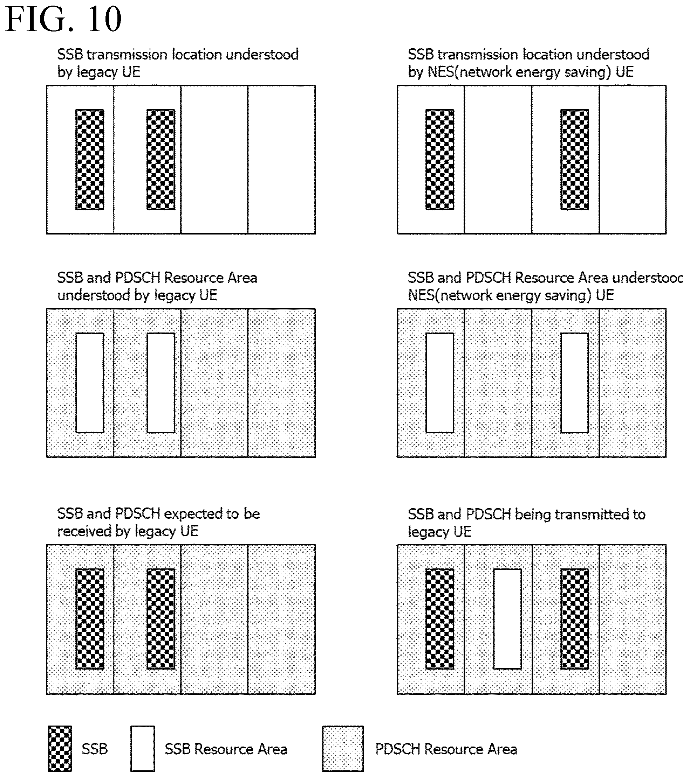

**FIG. 10** **illustrates SSB and/or PDSCH transmission and reception for a legacy UE according to the disclosure.**

FIG. 10 shows an example of an SSB-related operation for the legacy UE according to the foregoing third disclosure, i.e., the Release-17 UE. In FIG. 10, the SSB-related operation is shown by way of example, but the third disclosure may also be applied even to the CSI-RS-related operation.

Referring to the left side of FIG. 10, the SSB may be allocated to the SSB transmission location understood by the legacy UE through the resource area understood by the legacy UE, and transmitted as multiplexed with the PDSCH. In this case, the legacy UE may receive the anticipated SSB and PDSCH without any additional operation.

Referring to the right side of FIG. 10, the SSB may be allocated to the SSB transmission location understood by a network energy saving (NES) UE, i.e., the Release-18 UE through the resource area understood by the NES UE, and transmitted to the legacy UE as multiplexed with the PDSCH. In this case, the SSB transmission may not occur through the SSB resource area understood by the legacy UE, and the SSB transmission may occur through the PDSCH resource area understood by the legacy UE. Regarding the SSB resource area where the SSB transmission does not occur, the base station may transmit the PDSCH by performing the puncturing. In addition, the SSB transmission for the NES UE may be occur through the PDSCH resource area understood by the legacy UE, in which case the legacy UE may understood the SSB transmission as noise, and the base station may perform the PDSCH transmission using a lower MCS to enable the FEC as described above in the third disclosure.

### <Summary of Embodiments>

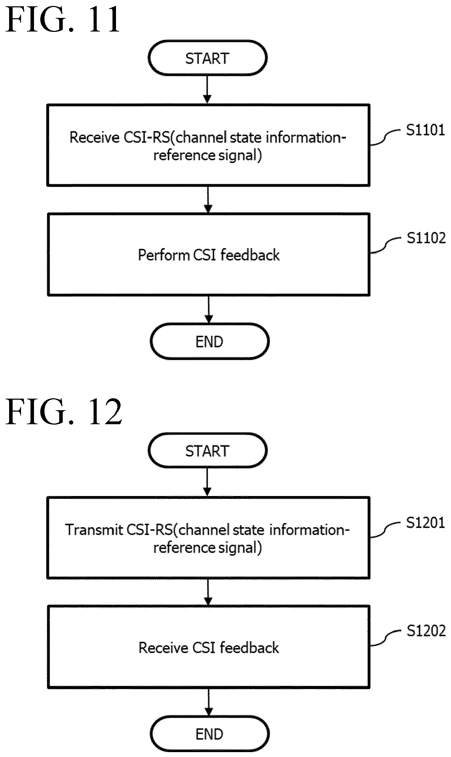

**FIG. 11** **illustrates an operation method of a UE according to an embodiment of the disclosure.**

Referring to FIG. 11, the UE receives the CSI-RS from the base station (S1101). Then, the UE performs CSI feedback (S1102). Here, the CSI feedback corresponds to the transmission of the CSI report to the base station.

Meanwhile, at least one of the CSI-RS reception and the CSI feedback reception performed in the UE may be triggered by receiving the DCI including parameter information associated with the network energy saving. Here, the DCI may be received through the UE dedicated PDCCH.

Further, the parameter information associated with the network energy saving may be given in the form of a bitmap. In addition, the parameter information associated with the network energy saving may be configured through a RRC layer.

The parameter information associated with the network energy saving may include CSI-RS transmission frequency information.

At least one of the CSI-RS reception and the CSI feedback transmission may be triggered after a period of time, after receiving the DCI.

**FIG. 12** **illustrates an operation method of a base station according to an embodiment of the disclosure.**

Referring to FIG. 12, the base station transmits the CSI-RS to the UE (S1201). Then, the base station receives the CSI feedback from the UE (S1102).

Meanwhile, at least one of the CSI-RS transmission and the CSI feedback reception performed in the base station may be triggered by transmitting the DCI including the parameter information associated with the network energy saving. Here, the DCI may be transmitted through the UE dedicated PDCCH.

Further, the parameter information associated with the network energy saving may be given in the form of a bitmap. In addition, the parameter information associated with the network energy saving may be configured through a RRC layer.

The parameter information associated with the network energy saving may include CSI-RS transmission frequency information.

At least one of the CSI-RS transmission and the CSI feedback reception may be triggered after a period of time, after transmitting the DCI.

### <Apparatuses to which the Disclosure is applicable>

The disclosure described up to now may be implemented through various means. For example, the disclosure may be implemented by hardware, firmware, software, or a combination thereof. Details will be described with reference to the accompanying drawings.

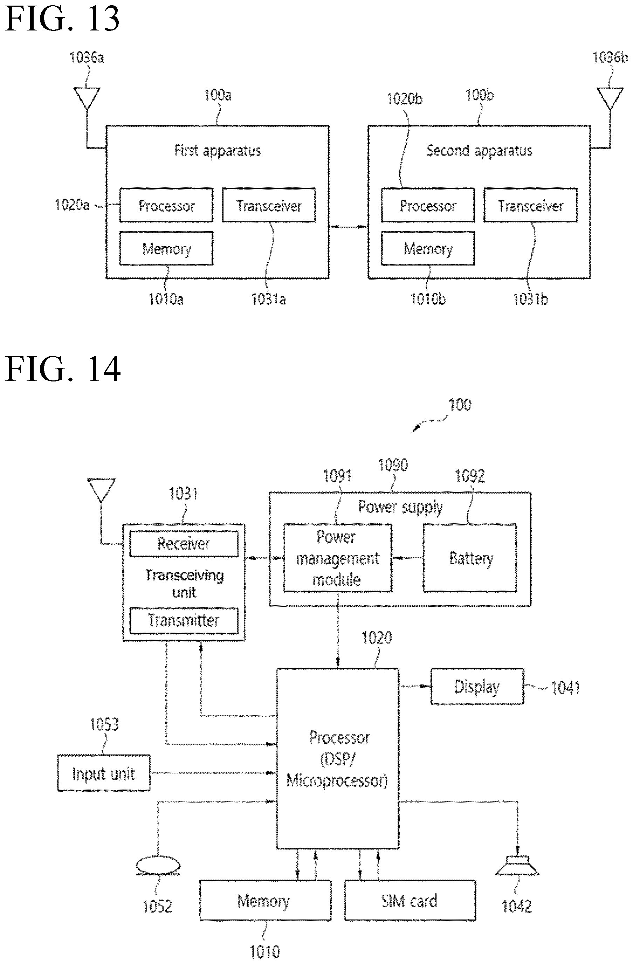

**FIG. 13** **shows apparatuses according to an embodiment of the disclosure.**

Referring to FIG. 13, a mobile communication system may include a first apparatus 100a and a second apparatus 100b.

The first apparatus 100a may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a, and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 14** **is a block diagram showing a configuration of a UE according to an embodiment of the disclosure.**

In particular, FIG. 14 illustrates the foregoing apparatus of FIG. 13 in more detail.

The apparatus includes a memory 1010, a processor 1020, a transceiving unit 1031, a power management module 1091, a battery 1092, a display 1041, an input unit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

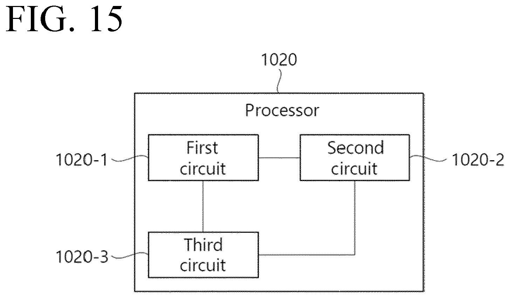

**FIG. 15** **is a configuration block diagram of a processor in which the disclosure is implemented.**

As can be seen with reference to FIG. 15, a processor 1020 in which the disclosure of the present specification is implemented may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP), and may include at least one of a digital signal processor (DSP), a central processing unit (CPU), and a graphics processing unit (GPU).

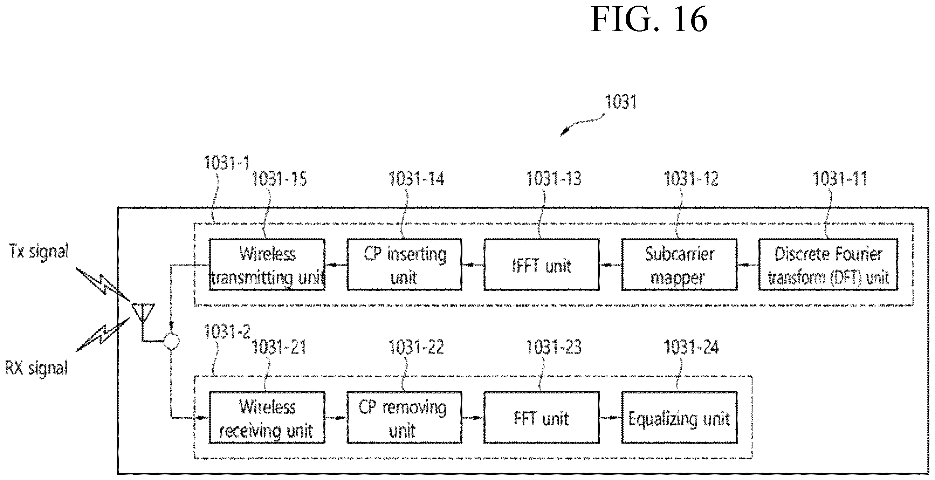

**FIG. 16** **is a detailed block diagram of a transceiver of a first apparatus shown in** **FIG. 13** **or a transceiving unit of an apparatus shown in** **FIG. 14****.**

Referring to FIG. 16, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the disclosure, the application of efficient signaling for a network energy saving function in the mobile communication system may be expected to prevent the legacy UEs from malfunctioning, and support the optimal operations for the UEs supporting the network energy saving function.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a user equipment (UE) in a mobile communication system, the method comprising:
receiving channel state information-reference signal (CSI-RS); and
performing CSI feedback after receiving the CSI-RS,
wherein at least one of the CSI-RS reception and the CSI feedback is triggered by receiving downlink control information (DCI) comprising parameter information associated with network energy saving.

2. The method of claim 1, wherein the DCI is received through a UE dedicated physical downlink control channel (PDCCH).

3. The method of claim 1 or 2, wherein the parameter information associated with the network energy saving is given in a bitmap form.

4. The method of any one of claims 1 to 3, wherein the parameter information associated with the network energy saving is configured through a radio resource control (RRC) layer.

5. The method of any one of claims 1 to 4, wherein the parameter information associated with the network energy saving comprises CSI-RS transmission frequency information.

6. The method of any one of claims 1 to 5, wherein at least one of the CSI-RS reception and the CSI feedback is triggered after a certain amount of time, after receiving the DCI.

7. A method of operating a base station in a mobile communication system, the method comprising:
transmitting channel state information-reference signal (CSI-RS); and
receiving CSI feedback after transmitting the CSI-RS,
wherein at least one of the CSI-RS transmission and the CSI feedback reception is triggered by transmitting downlink control information (DCI) comprising parameter information associated with network energy saving.

8. The method of claim 7, wherein the DCI is transmitted through a UE dedicated physical downlink control channel (PDCCH).

9. The method of claim 7 or 8, wherein the parameter information associated with the network energy saving is given in a bitmap form.

10. The method of any one of claims 7 to 9, wherein the parameter information associated with the network energy saving is configured through a radio resource control (RRC) layer.

11. The method of any one of claims 7 to 10, wherein the parameter information associated with the network energy saving comprises CSI-RS transmission frequency information.

12. The method of any one of claims 7 to 11, wherein at least one of the CSI-RS transmission and the CSI feedback reception is triggered after a certain amount of time, after transmitting the DCI.

13. A communication apparatus in a mobile communication system, the apparatus comprising:
at least one processor; and
at least one memory configured to store instructions and be operably electrically connectable to the at least one processor, wherein an operation performed based on the instruction executed by the at least one processor comprises:
receiving channel state information-reference signal (CSI-RS); and
performing CSI feedback after receiving the CSI-RS,
wherein at least one of the CSI-RS reception and the CSI feedback is triggered by receiving downlink control information (DCI) comprising parameter information associated with network energy saving.

14. The apparatus of claim 13, wherein the DCI is received through a UE dedicated physical downlink control channel (PDCCH).

15. The apparatus of claim 13 or 14, wherein the parameter information associated with the network energy saving is given in a bitmap form.
